# EUROPEAN PATENT SPECIFICATION

(11) **EP 0 279 579 B1**
(45) Date of publication and mention of the grant of the patent: **21.04.1993**
(21) Application number: 88301088.6
(22) Date of filing: 09.02.1988
(51) Int. Cl.: C09J 7/04

(54) **Irregular section adhesive sheets**
Unregelmässiges Profil aufweisende Klebefolien
Feuilles adhésives à section irrégulière

(30) Priority: 09.02.1987 JP 26331/87; 13.03.1987 JP 56451/87
(43) Date of publication of application: 24.08.1988
(73) Proprietor: Bridgestone Corporation, Tokyo 104 (JP)
(72) Inventor: Tanuma, Itsuo, Sayama City Saitama Pref. (JP); Ohtsuru, Hiromi, Akigawa City Tokyo (JP); Nishida, Isao, Akigawa City Tokyo (JP); Matsuo, Takaaki, Higashiyamato City Tokyo (JP); Fukuura, Yukio, Kawagoe City Saitama Pref. (JP); Honda, Toshio, Akigawa City Tokyo (JP); Nakamura, Makoto, Fujimi City Saitama Pref. (JP); Yoshida, Kyoei, Tama City Tokyo (JP)
(74) Representative: Whalley, Kevin

(56) References cited:
- EP-A- 0 149 135
- WO-A-85/04602
- DE-A- 3 417 746
- DE-A- 3 537 433
- US-A- 3 203 823

## Description

This invention relates to an adhesive sheet having an adhesion face of irregular section, and more particularly to adhesive sheets which are very easy to peel and re-use and have irregular section at the adhesion face.

In general, it is well-known that a pressure-sensitive adhesive is frequently used when a first sheet material is laminated to a second sheet material. However, if it is required to peel the first sheet adhered with the pressure-sensitive adhesive from the resulting laminate sheet and laminate it to another sheet material, there is a problem that the peeling of the first sheet cannot be performed because of a strong adhesion force or, if peeling is possible, the second sheet may be broken
Therefore, it is usual to use a pressure-sensitive adhesive having a low adhesion force or a so-called easy-releasable pressure-sensitive adhesive for performing the relamination as mentioned above. However, such a pressure-sensitive adhesive has drawbacks that repeated laminating is impossible and turning or peeling tends to be caused from the end of the laminated sheet in use.
That is, this adhesive is lacking in reliability.

When the area of the sheet material becomes wider than a certain value, it is very difficult to perform the laminating itself. For example, when a wall paper is laminated onto a wall, wrinkles or air pockets are apt to be produced, so that the application of the wall paper becomes difficult for less experienced persons. That is, a highly skilled technique is required in laminating of wall paper or the like.

Attention is drawn to the disclosures of EP-A-0 149 135, WO-A-8 504 602, DE-A-3 537 433 and DE-A-3 417 746.

It is an aim of the present invention to overcome or at least mitigate the aforementioned drawbacks of the conventional techniques and provide an adhesive sheet with a high reliability, which can be readily re-laminated even by an inexperienced person and which does not peel in use.

According to the invention, there is provided an irregular section adhesive sheet comprising a substrate and a continuous pressure-sensitive adhesive layer adhered to said substrate and having a macroscopically non-uniform adhesion face, wherein said pressure-sensitive adhesive is a rubber series adhesive and wherein said substrate is paper or film.

The term "irregular section" used herein means that when the adhesive sheet is vertically cut at an optional position, the cut surface in section of the pressure-sensitive adhesive layer is uneven.

The pressure-sensitive adhesive preferably has a crosslinked structure. More particularly, the pressure-sensitive adhesive is a rubber series adhesive, and particularly suitable is a butyl rubber series adhesive composed mainly of halogenated butyl rubber and/or ethylene-propylene-diene terpolymer rubber, polybutene, photopolymerizable compound, silica and photosensitizer and crosslinked through irradiation of ultraviolet rays.

The invention will be further described, by way of example only, with reference to the accompanying drawings, wherein;

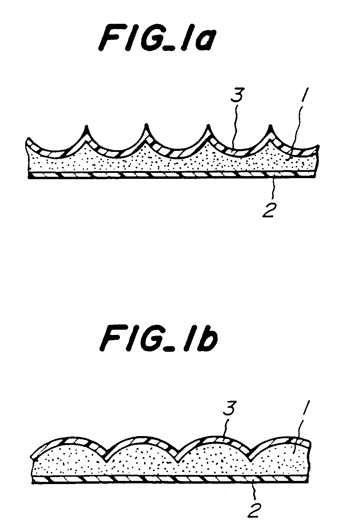

Figs. 1a and 1b are partial section views of embodiments of irregular section adhesive sheet according to the invention, respectively.

As mentioned above, the irregular section adhesive sheet according to the invention comprises a substrate and a pressure-sensitive adhesive layer adhered thereto and having an uneven adhesion face. Therefore, the boundary face between the adhesive sheet and an adherent approaches point-contact or line-contact, so that the adhesive sheet comes into partial contact with the adherent at any position.

In general, when an area-contacted adhesive sheet is peeled from the adherent, if a pressure-sensitive adhesive having a high adhesion strength is used as the pressure-sensitive adhesive layer, the adhesive sheet cannot be peeled in a reusable state because failure occurs in the inside of the adhesive layer or the substrate, or a part of the adhesive remains on the adherent to spoil the appearance and damage the reuse of the adhesive sheet itself
In the adhesive sheet according to the invention, since the contact type is a partial contact at the irregular section, even when using a pressure-sensitive adhesive with a high adhesion strength, the adherent portion and the non-contact portion alternately occur at the peeling face in the peeling from the adherenet, so that the peeling can easily be made because the peeling point shifts from the adhered portion to the non-contact portion before material failure occurs in the adhered portion.
That is, no material failure is caused by repeating this shifting phenomenon, so that the peeling can be smoothly performed over the whole of the sheet.
Furthermore, since a pressure-sensitive adhesive having a high adhesion strength is used as the adhesive layer, there is naturally caused no peeling from the end of the sheet in use and the reliability is very high. Moreover, the adhesive sheet according to the invention can be repeatedly used to be applied to various adherents many times.

According to the invention, it is necessary to maintain the irregular section of the adhesion face of the pressure-sensitive adhesive layer over a long period of time, considering that the irregular section of the adhesion face changes due to the fluidity of the pressure-sensitive adhesive in use or storage. For this purpose, it is preferable to introduce a crosslinked structure into the pressure-sensitive adhesive.

As mentioned above, the adhesive sheet according to the invention can freely peel even for a long time after the lamination and also be subjected to repetitive use and peeling many times. Furthermore, the adhesive sheet according to the invention can be applied to any kind of material as an adherent, so that it may be usable over a wide range of applications inclusive of a relatively large surface area, such as advertising media, various markings, interior and exterior decorations for buildings, and transportation means, electric appliances, indoor and outdoor fixtures, public working articles, ocean articles, living articles, toys, sports requisites, playthings and the like,

In the adhesive sheet according to the invention, after the adhesion face of the pressure-sensitive adhesive layer is made uneven to form an irregular section of the adhesion face, the cross-linked structure may be introduced into the adhesive layer, if necessary.

The introduction of the crosslinked structure is carried out by heat or through irradiation by electromagnetic waves, particularly electron beams or ultraviolet rays.

As the pressure-sensitive adhesive to be used in the adhesive sheet according to the invention, rubber series adhesives capable of easily forming an irregular section profile and being easily crosslinked through ultraviolet rays, particularly butyl rubber adhesives, are used.

As such a photo-crosslinkable butyl rubber adhesive, there is, for example, an adhesive having the following composition.

| | |
|---|---|
| brominated butyl rubber | 40 (part of weight) |
| polybutene 2000H | 60 |
| silica | 12 |
| trimethylol propane triacrylate | 3 |
| benzoinisopropyl ether | 0.4 |
| 2,6-dimethyl-p-cresol | 0.4 |

In addition all crosslinked adhesives are naturally usable as mentioned above.

The formation of an irregular section profile of uneven adhesion face may be carried out by various methods, for example a method wherein the adhesive sheet is pressed in a previously engraved press mold, a method wherein the sheet is passed between engraved rolls, or a method wherein the sheet is pressed in a mold or passed between rolls together with a releasing paper or film having an irregular section profile;
The invention will be further described with reference to the following illustrative Examples.

### Example 1

### (A) Preparation of pressure-sensitive adhesive

A composition having the following compounding recipe was kneaded in a kneader to form a pressure-sensitive adhesive:

| | |
|---|---|
| brominated butyl rubber (Bromobutyl 2255, made by Japan Synthetic Rubber Co., Ltd.) | 40 (parts by weight) |
| Polybutene 2000H (made by Idemitsu Petrochemical Co. Ltd.) | 60 |
| Silica VN-3 (made by Nippon Silica Co. Ltd.) | 12 |
| trimethylol propane triacrylate | 3 |
| benzoin isopropyl ether | 0.4 |
| 2,6-di-t-butyl-p-cresol | 0.4 |

### (B) Preparation of irregular section adhesive sheet

(1) The above pressure-sensitive adhesive was interposed between a polyester film of 100 µm in thickness and a releasing polyester film and pressed at 80°C to provide a thickness of the adhesive layer of 0.4 mm.
(2) After the peeling of the releasing polyester film, a releasing film subjected to irregular section treatment (embossing) was put onto the pressure-sensitive adhesive layer so as to direct the treated surface to the adhesive layer and then pressed at 80°C to obtain an irregular section adhesive sheet.
   The sectional profile of the thus obtained adhesive sheet is shown in Fig. 1a or 1b, wherein numeral 1 is a pressure-sensitive adhesive layer, numeral 2 a substrate of polyester film, and numeral 3 a releasing embossed polyester film.
(3) An ultraviolet ray was irradiated to each of the adhesive sheets obtained in the above items (1) (adhesion face was flat) and (2) (adhesion face was concave or convex) through a high pressure mercury lamp of 4 kW separated from the side of the releasing polyester film at a distance of 15 cm for 15 seconds, whereby the adhesive layer was crosslinked. Then, the releasing film was peeled from the sheet to prepare a sample to be tested.

After the above sample was laminated to a glass plate or a veneer plate, the peeling strength and shearing strength were measured to obtain results as shown in the following Table 1.

**Table 1**

| Sectional shape | Glass plate | | Veneer plate | |
|---|---|---|---|---|
| | peeling strength (kg/25mm) | shearing strength (kg/cm²) | peeling strength (kg/25mm) | shearing strength (kg/cm²) |
| flat | 0.3 | 1.52 | 0.1 | 0.94 |
| concave | 0.05 | 0.8 | - | - |
| convex | 0.01 | 0.36 | 0.01 | 0.34 |

As seen from Table 1, the peeling strength of the irregular section adhesive sheets according to the invention (sectional profile is concave or convex) is considerably lower than that of the flat section adhesive sheet, while the reduction of the shearing strength is small.

Therefore, the irregular section adhesive sheet according to the invention is easy in laminating and peeling, less in displacement during use and very high in reliability.

### Example 2

Each of the same three adhesive sheets as in Example 1 was laminated to a glass plate and heated in an oven at 100°C for 500 hours, which was subjected to a peeling test. As a result, the irregular section adhesive sheets according to the invention were simply peeled from the glass plate, so that the lamination thereof could be repeated many times. On the contrary, the adhesive sheet having a flat surface was strongly bonded to the glass plate. If the latter sheet was forcedly peeled, the substrate of the polyester film was damaged and aggregation breakage was caused in the adhesive layer to make the reuse of the sheet impossible.

## Claims

1. An irregular section adhesive sheet comprising a substrate (2) and a continuous pressure-sensitive adhesive layer (1) adhered to said substrate and having a macroscopically non-uniform adhesion face, wherein said pressure-sensitive adhesive is a rubber series adhesive and wherein said substrate is paper or film.

2. An irregular section adhesive sheet as claimed in claim 1, characterized in that said pressure-sensitive adhesive has a crosslinked structure.

3. An irregular section adhesive sheet as claimed in claim 1 or 2, characterized in that said rubber series adhesive is a butyl rubber series adhesive composed mainly of halogenated butyl rubber and/or ethylene-propylene-diene terpolymer rubber, polybutene, photopolymerizable compound, silica and photosensitizer and crosslinked through irradiation of ultraviolet rays.

## Patentansprüche

1. Eine ein unregelmäßiges Profil aufweisende Klebefolie mit einem Schichtträger (2) und einer zusammenhängenden, drucksensitiven Klebeschicht (1), die mit dem Schichtträger verhaftet ist und eine makroskopisch ungleichförmige Klebefläche hat, wobei der drucksensitive Kleber ein Kleber der Gummireihe und der Schichtträger Papier oder Film ist.

2. Eine ein unregelmäßiges Profil aufweisende Klebefolie nach Anspruch 1, dadurch gekennzeichnet, daß der drucksensitive Kleber eine vernetzte Struktur hat.

3. Eine ein unregelmäßiges Profil aufweisende Klebefolie nach Anspruch 1 oder 2, dadurch gekennzeichnet, daß der Kleber der Gummireihe ein Kleber der Butylgummireihe ist und hauptsächlich aus halogeniertem Butylgummi und/oder Äthylenpropylendienterpolymergummi, Polybuten, fotopolymerisierbarer Verbindung, Siliziumdioxyd und Fotosensibilisator zusammengesetzt ist und durch Bestrahlung mit Ultraviolettstrahlen vernetzt ist.

## Revendications

1. Une feuille adhésive à section irrégulière comprenant un substrat (2) et une couche auto-adhésive continue (1) collée au dit substrat et ayant une surface d'adhésion macroscopiquement non uniforme, dans laquelle ledit auto-adhésif est un adhésif de la classe des caoutchoucs, ledit substrat étant du papier ou un film.

2. Une feuille adhésive à section irrégulière selon la revendication 1, caractérisée en ce que ledit auto-adhésif a une structure réticulée.

3. Une feuille adhésive à section irrégulière selon les revendications 1 ou 2, caractérisée en ce que ledit adhésif de la classe des caoutchoucs est un adhésif de la gamme des caoutchoucs "butyles" composé essentiellement d'un caoutchouc "butyle" halogéné et/ou de caoutchouc terpolymère d'éthylène-propylène-diène, de polybutène, d'un composé photopolymérisable, de silice et d'un photo-sensibilisateur et réticulé par une irradiation aux rayons ultraviolets.
